# EUROPÄISCHE PATENTSCHRIFT

(11) **EP 3 110 725 B1**
(45) Veröffentlichungstag und Bekanntmachung des Hinweises auf die Patenterteilung: **10.10.2018**
(21) Anmeldenummer: 15704554.3
(22) Anmeldetag: 16.02.2015
(51) Int. Cl.: B65G 17/20, B65G 17/48

(54) **HÄNGEFÖRDEREINRICHTUNG MIT LADESTATION**
HANGING CONVEYANCE DEVICE WITH LOADING STATION
CONVOYEUR AÉRIEN COMPRENANT UN POSTE DE CHARGEMENT

(30) Priorität: 24.02.2014 DE 102014203298
(43) Veröffentlichungstag der Anmeldung: 04.01.2017
(73) Patentinhaber: RSL Logistik GmbH & Co. KG, 86899 Landsberg (DE)
(72) Erfinder: SCHÖNENBERGER, Rolf, 86899 Landsberg am Lech (DE)
(74) Vertreter: Weickmann & Weickmann PartmbB
(86) Internationale Anmeldenummer: PCT/EP2015/053203
(87) Internationale Veröffentlichungsnummer: WO 2015/124524

(56) Entgegenhaltungen:
- WO-A1-2012/123564
- WO-A1-2012/156451
- WO-A1-2014/012965
- WO-A1-2014/044601

## Beschreibung

Die vorliegende Erfindung betrifft eine Hängefördereinrichtung gemäß dem Oberbegriff von Anspruch 1 zum Transport von Fördergut in Hängetaschen. Die Hängefördereinrichtung umfasst eine Mehrzahl von Hängetaschen, jeweils mit einer ersten Taschenseitenwand und einer zweiten Taschenseitenwand, die in einem Klappverbindungsbereich so miteinander verbunden sind, dass sie zum Öffnen und Schließen eines Fördergutaufnahmebereiches auseinanderklappbar und zusammenklappbar sind, und mit einem Anhängmittel zum Anhängen der Hängetasche an der Hängefördereinrichtung.

Dabei ist die erste Taschenseitenwand schwenkbeweglich um eine in einer Transportstellung der Hängetasche zumindest annähernd horizontal verlaufende Taschen-Schwenkachse mit dem Anhängmittel verbunden, und die zweite Taschenseitenwand ist derart mit dem Anhängmittel verbunden oder davon beaufschlagbar, dass durch Schwenken der ersten Taschenseitenwand um die Taschen-Schwenkachse die erste und die zweite Taschenseitenwand auseinander- und zusammenklappbar sind.

Weiterhin umfasst die Hängefördereinrichtung eine Führungsschienenanordnung zum geführten Bewegen der Hängetaschen in ihrer Transportstellung sowie eine Ladestation für die Hängetaschen, mit einer Ladeplattform, welche unterhalb der Führungsschienenanordnung positioniert ist.

Eine derartige gattungsgemäße Hängefördereinrichtung ist beispielsweise in der Druckschrift WO 2014/012965 A1 offenbart.

Bei dieser bekannten Hängefördereinrichtung ist die Ladestation als stationäre Plattform ausgebildet, etwa einem fest montierten Tisch, mit einer Tischplatte, die auf einer geeigneten Höhe in Bezug auf die Führungsschienenanordnung angeordnet ist, um die erste Taschenseitenwand einer zu dem Tisch hin transportierten Hängetasche bei Kontakt mit dieser um ihre Taschen-Schwenkachse zu schwenken und damit die erste und die zweite Taschenseitenwand auseinanderzuklappen, um die Tasche manuell oder automatisch be- oder entladen zu können.

Die nachveröffentlichte Druckschrift WO 2014/044601 A1 offenbart eine gattungsgemäße Hängefördereinrichtung, bei der die Ladeplattform vertikal verstellbar oder um eine im Wesentlichen horizontale Schwenkachse drehbar ist.

Aus der WO 2012/156451 A1 ist eine Hängefördereinrichtung mit mehreren Entladestationen bekannt, die jeweils eine stationäre Tischplatte als Ladeplattform umfassen. Dabei wird ein selektives Entladen der Hängetaschen dadurch ermöglicht, dass ein hakenförmiges Betätigungsglied selektiv in den Förderpfad der Hängetaschen eingefahren werden kann, um einen Klemmhebel der jeweiligen Hängetasche zu lösen und diese so zu öffnen.

Die Druckschrift WO 2012/123564 A1 offenbart eine Hängefördereinrichtung für an wenigstens einer Stirnseite offene Hängetaschen mit anhebbarem Boden. Diese Hängefördereinrichtung umfasst eine unter der Schienenanordnung positionierte und vertikal verstellbare Hubeinrichtung mit einer Plattform zum Anheben des Bodens und damit eines Ladeguts innerhalb der Tasche auf eine Höhe, in der das Ladegut horizontal und senkrecht zur Förderrichtung aus der Hängetasche ausgeschoben werden kann.

Vor dem Hintergrund dieses Standes der Technik besteht die Aufgabe der vorliegenden Erfindung daran, die gattungsgemäße Hängefördereinrichtung so weiterzuentwickeln, dass Ladeprozesse einfacher und flexibler gestaltet werden können.

Diese Aufgabe wird gelöst durch eine Hängefördereinrichtung mit den Merkmalen von Anspruch 1.

Erfindungsgemäß ist vorgesehen, dass die Ladeplattform relativ zu der Führungsschienenanordnung in vertikaler Richtung verstellbar, vorzugsweise automatisch verfahrbar ist.

Wenn eine Hängetasche beim Transport den Ort der Ladestation erreicht, kann durch vorzugsweise automatisches Hochfahren der Ladeplattform die Schwenkbewegung zur Öffnung der Hängetasche einfach und schnell eingeleitet werden. Außerdem können die Hängetaschen durch die Verstellbewegung automatisch entriegelt werden.

Weiterhin besteht die Möglichkeit, die Hängefördereinrichtung mit Hängetaschen verschiedener Größe zu betreiben, da je nach Hängetasche die Ladeplattform auf eine geeignete Höhe zum Öffnen der jeweiligen Tasche verfahren werden kann.

Der Begriff "Laden" soll hierbei stets sowohl Beladen wie auch Entladen beinhalten.

Um den Transport von Hängetaschen entlang der Führungsschienenanordnung nicht zu behindern, befindet sich eine Person oder eine Einrichtung zum Be- bzw. Entladen der Hängetaschen häufig seitlich von der Führungsschienenanordnung.

Um den Ladevorgang zu vereinfachen, ist erfindungsgemäß vorgesehen, dass die Ladeplattform zusätzlich um eine im Wesentlichen vertikale Plattform-Schwenkachse drehbar ist. Insbesondere kann die Hängetasche zunächst durch die Ladeplattform um die Taschen-Schwenkachse geschwenkt und somit auseinandergeklappt werden, und dann kann die geöffnete Hängetasche auf der Lade-Plattform um die vertikale Plattform-Schwenkachse beispielsweise um 90° gedreht und so in eine Stellung verbracht werden, in der sie auf einfache Weise be- und entladen werden kann.

Damit die an der Führungsschienenanordnung hängende Hängetasche dazu in der Lage ist, eine entsprechende Schwenkbewegung um eine vertikale Achse durchzuführen, kann das Anhängmittel ein geeignetes Schwenk-Lager umfassen oder einfach so weit wie nötig auf Torsion um die vertikale Achse belastbar sein.

Eine automatisierte Entladung kann dadurch erleichtert werden, dass die erste Taschenseitenwand aus ihrer im Wesentlichen vertikalen Transportstellung um mehr als 90° um die Taschen-Schwenkachse geschwenkt wird, so dass Fördergut längs der resultierenden Schräge aus der Hängetasche heraus rutschen kann. Dies kann bei der erfindungsgemäßen Hängefördereinrichtung dadurch unterstützt werden, dass die Ladeplattform weiter um eine im Wesentlichen horizontale Plattform-Kippachse verkippbar ist.

Zum vorzugsweise automatisierten Beladen der Hängetaschen kann unter Umständen ein Verschwenken der ersten Taschenseitenwand aus ihrer im Wesentlichen vertikalen Transportstellung um weniger als 90° um die Taschen-Schwenkachse sinnvoll sein, um eine Schräge zu erhalten, längs der Fördergut automatisch in die Hängetasche hinein gleiten kann. Auch dies kann durch eine entsprechende Verkippbarkeit der Ladeplattform unterstützt werden.

Gemäß einer bevorzugten Weiterbildung kann vorgesehen sein, dass die Ladeplattform durch eine Verstellbewegung zwischen einer Ruhestellung und einer Ladestellung verstellbar ist, wobei die Verstellbewegung eine Translation in vertikaler Richtung und vorzugsweise zusätzlich eine Rotation um die Plattform-Schwenkachse umfasst. Besonders bevorzugt kann die Verstellbewegung weiter ein Verkippen der Ladeplattform um die Plattform-Kippachse umfassen.

Auf diese Weise kann die jeweilige Hängetasche automatisiert von der Transportstellung, in die der erste Taschenseitenwand im Wesentlichen vertikal herabhängen kann, in eine zum Be- bzw. Entladen optimale Stellung verbracht werden.

Üblicherweise befindet sich die Ladeplattform in der Ruhestellung in der am weitesten unten gelegenen Stellung. Auf diese Weise können Hängetaschen unterschiedlicher Größe aber auch auf andere Weise als in den vorstehend beschriebenen Hängetaschen an der Führungsschienenanordnung gehaltene Waren ohne Behinderungen zu der Ladestation und über diese hinweg transportiert werden, etwa besonders lange Artikel, beispielsweise Mäntel, die auf Kleiderbügeln transportiert werden, oder andere Artikel, die an Mini-Trolleys angehängt und an diesen an der Führungsschienenanordnung befördert werden.

Es kann vorgesehen sein, dass das Anhängmittel der vorstehend beschriebenen Hängetaschen eine Einhängeinrichtung zum Einhängen von beispielsweise Kleiderbügeln aufweist, etwa in Form einer Einhängöffnung oder eines geeigneten Hakens, so dass auch besonders sperriges Hängegut an den Hängetaschen aufgenommen werden kann. Wird eine auf solche Weise mit Hängegut versehene Hängetasche zur Ladestation gefahren, können die Ladeplattform in ihrer Ruhestellung und die Hängetasche in ihrer Transportstellung belassen werden, und das Hängegut, etwa auf dem zugehörigen Kleiderbügel, kann zum Beispiel manuell von der Einhängeinrichtung abgenommen werden.

Um die Schwenk- und Öffnungsbewegung der Hängetasche zu einer geeigneten Zeit einzuleiten, kann vorgesehen sein, dass die Hängefördereinrichtung weiter eine manuell oder automatisch betätigbare Auslöseeinrichtung umfasst, um ein automatisches Verfahren der Ladeplattform von der Ruhestellung in die Ladestellung oder umgekehrt auszulösen.

Eine solche Auslöseeinrichtung könnte bei einer Ladestation, die von einer Person betrieben wird, beispielsweise einen mit dem Fuß oder der Hand betätigbaren Schalter oder Hebel umfassen. Alternativ können zu diesem Zweck auch Lichtschranken oder Lichtgitter vorsehen sein, die dazu ausgebildet sind, eine an der Ladestation ankommende Hängetasche zu erfassen.

In dem bevorzugten Fall, in dem die Hängetaschen jeweils mit automatisch auslesbaren Kennungen versehen sind, die bevorzugt jede einzelne Hängetasche eindeutig identifizierbar machen und einen automatischen Zugriff auf die Daten der jeweiligen Hängetasche (wie Typ und Größe) sowie gewünschtenfalls auf deren aktuelle Beladung ermöglichen, kann die Auslöseeinrichtung eine an geeigneter Stelle (etwa in Transportrichtung der Hängetaschen kurz vor der Ladeplattform) vorgesehene Leseeinrichtung für diese Kennungen umfassen, die in Kommunikationsverbindung mit der Steuereinrichtung für die Ladeplattform stehen kann.

Auf diese Weise kann automatisch bestimmt werden, ob eine an der Ladestation ankommende Hängetasche überhaupt be- oder entladen werden soll, auf welche Höhe die Ladeplattform zu verstellen ist, um die Hängetasche zu öffnen, und welche Artikel akuell be- oder entladen werden.

Die Kennung ist bevorzugt am Anhängmittel (Trolley) vorgesehen.

Eine weitere Automatisierung und damit Beschleunigung des Transports in der Hängefördereinrichtung oder auch eine besonders kontrollierte Öffnungsbewegung kann dadurch erreicht werden, dass die Ladestation weiter eine in Transportrichtung der Hängetaschen vor der Ladeplattform angeordnete Einweiseinrichtung umfasst, um die Hängetaschen in ihrer Transportstellung auszurichten.

Alternativ kann eine solche Einweiseinrichtung auch an der Ladeplattform, vorzugsweise an einem in Transportrichtung vorderen Ende der Ladeplattform vorgesehen sein, wobei die Einweiseinrichtung besonders bevorzugt in die Ladeplattform integriert ist.

Um das Öffnen der Hängetaschen durch das Hochfahren der Ladeplattform geeignet und kontrolliert durchführen zu können, ist es günstig, wenn die jeweilige Hängetasche zunächst so ausgerichtet wird, dass ihre Taschen-Schwenkachse im Wesentlichen senkrecht zum Verlauf der Führungsschienenanordnung an dem Ort der Ladestation ist. Besonders relevant ist dies in dem Fall, dass das Anhängmittel ein Schwenk-Lager umfasst, um eine Rotation der Hängetasche um eine vertikale Achse zu ermöglichen. Eine derartige Ausrichtung kann gemäß der obigen Weiterbildung der erfindungsgemäßen Hängefördereinrichtung durch die Einweiseinrichtung erreicht werden.

Eine besonders einfache konstruktive Ausgestaltung der Einweiseinrichtung kann dadurch erreicht werden, dass die Einweiseinrichtung zwei AnschlagElemente umfasst, die senkrecht zu der Transportrichtung voneinander beabstandet sind und vorzugsweise auf einer Linie senkrecht zum Verlauf der Führungsschienenanordnung an dem Ort der Ladestation liegen.

Sofern in der Hängefördereinrichtung unterschiedlich große Hängetaschen verwendet werden, bei denen die Taschen-Schwenkachsen sich auf unterschiedlicher vertikaler Höhe befinden, kann insbesondere vorgesehen sein, dass auch die Einweiseinrichtung vertikal verstellbar ist. Dies kann auf besonders einfache Weise dadurch realisiert werden, dass die Einweiseinrichtung an der Ladeplattform vorgesehen oder in diese integriert ist.

Zur Entlastung einer Bedienperson und/oder zur stärkeren Automatisierung des Verfahrens kann vorgesehen sein, dass die Einweiseinrichtung weiterhin einen Sensor umfasst, der bei Annäherung einer Hängetasche auf einen vorgegebenen Abstand oder bei Kontakt mit der Hängetasche ein Verfahren der Ladeplattform von der Ruhestellung in die Ladestellung auslöst. Hierbei bildet dieser Sensor in Kombination mit einer geeigneten Steuereinrichtung zur Ansteuerung des Antriebs der Verstellbewegung die vorstehend beschriebene Auslöseeinrichtung.

Zur Überwachung der Ladevorgänge kann vorgesehen sein, dass die Ladestation eine Lichtschranken- oder Lichtgitter-Anordnung umfasst, welche insbesondere so angeordnet sein kann, dass sie den zum Be- oder Entladen einer Hängetasche vorgesehenen Bereich der Ladeplattform in der Ladestellung überwacht.

So kann etwa festgestellt werden, dass eine jeweilige Hängetasche ordnungsgemäß (automatisch oder manuell) entladen oder beladen wurde und der Prozess fortgesetzt werden kann.

Dies ist insbesondere sinnvoll und erhöht die Bedienungsfreundlichkeit im Falle einer Ent- oder Beladung von Taschen an der gleichen Ladestation mit verschiedenartigen Artikeln, die ein unterschiedliches Maß an Sorgfalt bei der Handhabung und entsprechen unterschiedliche Lade-Zeiten benötigen, etwa Schrauben einerseits und Seidenblusen andererseits.

Bleibt, insbesondere im Fall einer automatischen Ent- oder Beladung ein Artikel in der Hängetasche hängen oder wird nicht richtig in dieser aufgenommen, kann dies ebenfalls durch die Lichtgitter-Anordnung erfasst werden und beispielsweise ein akustisches oder/und optisches Signal auslösen, welches anzeigt, dass ein Benutzer-Eingriff notwendig ist.

Auch kann durch eine solche Lichtschranken- oder Lichtgitter-Anordnung sichergestellt werden, dass die Hängetasche nicht zusammengeklappt wird, solange sich die Hand einer Bedienperson im Fördergutaufnahmebereich oder in dessen Nähe befindet, was die Betriebssicherheit erhöht und Unfälle vermeidet.

Unter Umständen kann gewünscht sein, dass Hängetaschen in der Öffnungsstellung (mit von außen zugänglichem Fördergutaufnahmebereich), insbesondere der Be- bzw. Entladestellung, weiter liegend transportiert werden, ggf. auch während sie noch an die Führungsschienenanordnung angehängt sind.

Um dies zu erreichen, kann vorgesehen sein, dass die Hängefördereinrichtung in Transportrichtung hinter der Ladeplattform ein Förderband zum Transport der Hängetaschen in einer Öffnungsstellung umfasst, vorzugsweise in der Ladestellung.

Alternativ oder zusätzlich kann vorgesehen sein, dass die Hängefördereinrichtung weitere Fördereinrichtungen umfasst, beispielsweise Rutschen, über die Fördergut, vorzugsweise an der Ladestation aus einer Hängetasche entladenes Fördergut, einem Arbeitsplatz oder selektiv einem von mehreren Arbeitsplätzen zuführbar ist, beispielsweise um das Fördergut zu verpacken oder zu kommissionieren.

Auf diese Weise können verschiedenartige Artikel, die zu einer Bestellung zusammengestellt werden sollen, durch die Hängetaschen zu der Ladestation transportiert, dort entladen und über die weiteren Fördereinrichtungen einem bestimmten Arbeitsplatz zugeführt werden, was eine effiziente und ergonomische Ausgestaltung der Arbeitsplätze ermöglicht.

Nachfolgend wird die vorliegende Erfindung anhand von einem bevorzugten Ausführungsbeispiel illustriert, das in den beiliegenden Figuren dargestellt ist. Dabei zeigt:
- Figur 1: ein Ausführungsbeispiel einer Hängefördereinrichtung in einem Zustand, in welchem eine erste Hängetasche an einer Ladestation ankommt.
- Figur 2: zeigt die Hängefördereinrichtung aus Figur 1 zu einem späteren Zeitpunkt, in welchem die erste Hängetasche durch die Ladeplattform in eine Öffnungsstellung verbracht wurde.
- Figur 3: zeigt den Gegenstand von Figur 2 zu einem noch späteren Zeitpunkt, zu welchem die geöffnete Hängetasche um 90° geschwenkt und mit einem Artikel als Fördergut beladen wurde, und
- Figur 4: zeigt den Gegenstand von Figur 3 zu einem noch späteren Zeitpunkt, zu dem die mit dem Artikel beladene erste Hängetasche wieder in Transportstellung verbracht wurde und nun die nachfolgende zweite Hängetasche an der Ladestation angekommen ist.
- Fig. 5: zeigt eine Abwandlung des in den Figuren 1 bis 4 dargestellten Ausführungsbeispiels mit einem zusätzlichen Förderband zum Transport von Hängetaschen in der Öffnungs- oder Ladestellung.
- Fig. 6: zeigt Ausschnitte von einem weiteren Ausführungsbeispiel einer Hängefördereinrichtung mit einem speziellen Förderband mit Entlade-Einrichtung.
- Fig. 7: zeigt den Gegenstand von Figur 6 zu einem späteren Zeitpunkt, zu dem eine geöffnete Hängetasche die Entlade-Einrichtung erreicht hat.
- Figur 8: zeigt den Gegenstand von Figur 7 kurz vor dem Entladen,
- Figur 9: zeigt den Gegenstand von Figur 8 kurz nach dem Entladen.
- Fig. 10: zeigt eine leicht modifizierte Ladestation, die in der Hängefördereinrichtung gemäß dem in Figur 1 gezeigten Ausführungsbeispiel zum Einsatz kommen kann, betrachtet in Richtung der Führungsschienenanordnung, beim Entladen (Teilabbildung a)) und Beladen (Teilabbildung b)), und
- Fig. 11: illustriert die Verwendung eines Förderbands zum Transport von Klapp- oder Hängetaschen in der geöffneten Stellung.

Bei allen Figuren handelt es sich um stark vereinfachte Schemazeichnungen, die lediglich das Prinzip der Erfindung verdeutlichen sollen und insbesondere nicht maßstäblich zu verstehen sind. Um die Figuren nicht zu überfrachten, sind nicht alle Elemente in jeder Figur mit Bezugszeichen versehen, insbesondere in dem Fall mehrerer gleichartiger Elemente in einer Figur.

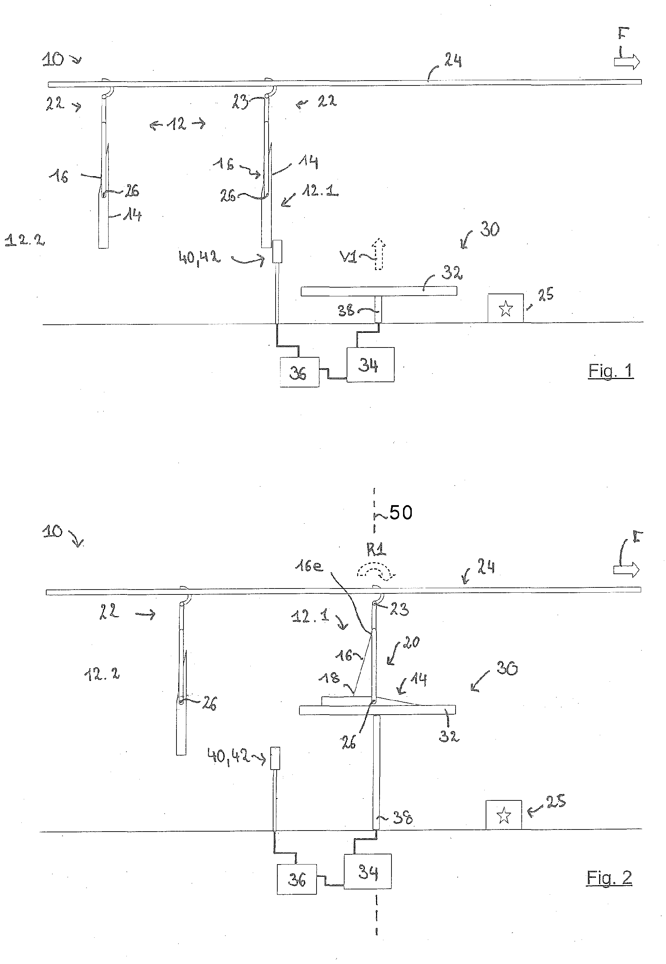

Figur 1 zeigt ein Beispiel für eine erfindungsgemäße Hängefördereinrichtung 10 mit einer Mehrzahl von Hängetaschen 12, im dargestellten Beispiel einer ersten Hängetasche 12.1 und einer zweiten Hängetasche 12.2.

Auch wenn die in dem vorliegenden Ausführungsbeispiel dargestellten Hängetaschen 12 gleichartig sind, ist dies nicht notwendig, da Hängetaschen verschiedener Größe (Höhe und Breite) und Form in der gleichen Hängefördereinrichtung eingesetzt werden können.

In der in Figur 1 dargestellten Momentaufnahme befinden sich beide Hängetaschen 12 in ihrer Transportstellung, in der die erste Taschenseitenwand 14 und die (in Figur 1 nicht deutlich zu erkennende) zweite Taschenseitenwand 16 zusammengeklappt sind und im Wesentlichen vertikal herabhängen. Weiterhin sind in dem dargestellten Beispiel beide Hängetaschen (noch) nicht beladen.

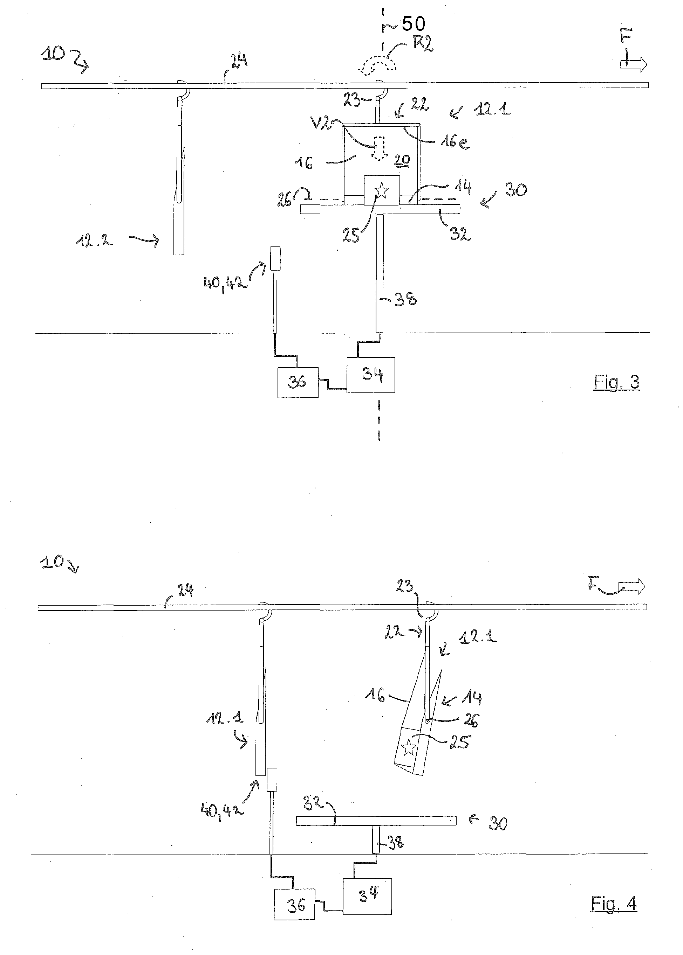

Bei den Hängetaschen 12 ist jeweils die erste Taschenseitenwand 14 und die zweite Taschenseitenwand 16 in einem Klappverbindungsbereich 18 so miteinander verbunden, dass sie zum Öffnen und Schließen eines Fördergutaufnahmebereiches 20 auseinander- und zusammengeklappt werden können. (vgl. Figuren 2 und 3).

Im Hinblick auf Details der Hängetaschen wird auf die Beschreibung der Ausführungsbeispiele der WO 2014/012965 A1 verwiesen, die jeweils in der hier dargestellten erfindungsgemäßen Hängefördereinrichtung zum Einsatz kommen können.

Vermittels eines Anhängmittels 22 ist die Hängetasche 12 an eine Führungsschienenanordnung 24 zum geführten Bewegen der Hängetaschen 12 in ihrer Transport- und Schließstellung angehängt. Die Anhängung an der Führungsschienenanordnung 24 ist hier stark vereinfacht dargestellt. Beispielsweise können Anhänger in der Art der bekannten (Mini-)Trolleys zum Einsatz kommen

Weiterhin zeigt Figur 1, dass die dargestellte Hängefördereinrichtung 10 eine Ladestation 30 für die Hängetaschen 12 umfasst, mit einer Ladeplattform 32 die unterhalb der Führungsschienenanordnung 24 positioniert ist.

Die Ladestation 30 kann weiter einen Antriebsmotor 34 zum Antreiben der später noch genauer beschriebenen Verstellbewegung der Ladeplattform 32 umfassen, sowie eine Steuereinrichtung 36 zum Steuern der vorgenannten Verstellbewegung.

Die Hängefördereinrichtung 10 kann, wie in Figur 1 gezeigt, weiter eine Einweiseinrichtung 40 umfassen, die beispielsweise zwei senkrecht zum Verlauf der Führungsschienenanordnung 24 voneinander beabstandete Anschlagelemente umfassen kann, an welcher die jeweilige Hängetasche 12, (in Figur 1 die Hängetasche 12.1) an entgegengesetzten Enden eines unteren Rande der ersten Taschenseitenwand 14 an den AnschlagElementen zur Anlage kommen und dadurch relativ zu der Führungsschienenanordnung 24 ausgerichtet werden kann, so dass die Taschen-Schwenkachse 26 senkrecht zur Führungsschienenanordnung 24 verläuft (in Figur 1 senkrecht zur Zeichenebene).

An der Einweiseinrichtung 40 kann ein Sensor 42 vorgesehen sein, der erfasst, wenn eine Hängetasche 12 sich diesem nähert oder diesen berührt, wobei dann ein entsprechendes Signal an die Steuereinrichtung 36 gesendet werden kann, um die Verstellbewegung der Ladeplattform 32 auszulösen und anzusteuern.

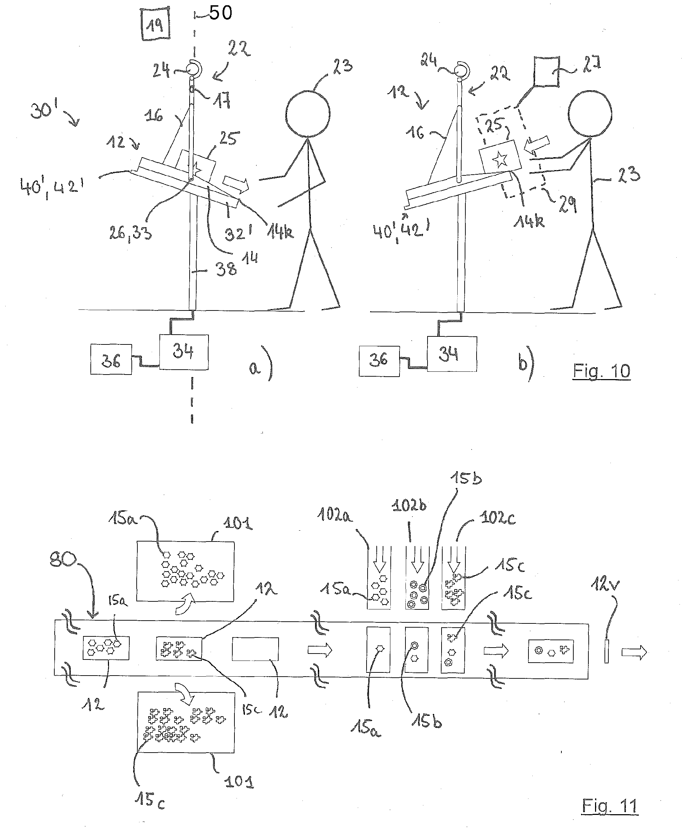

Anders als in Figur 1 dargestellt, könnte die Einweiseinrichtung 40 auch an der Ladeplattform 32 vorgesehen oder in diese integriert sein (vgl. Fig. 10).

Figur 2 zeigt den Gegenstand von Figur 1 zu einem etwas späteren Zeitpunkt, bei dem die Ladeplattform 32, ausgehend von der in Figur 1 gezeigten Ruhestellung, wie durch den gestrichelten Pfeil V1 in Figur 1 angedeutet, vertikal nach oben verfahren wurde.

Gleichzeitig wurde die erste Hängetasche 12.1 in Transportrichtung F weiter transportiert und auf diese Weise wurde die erste Taschenseitenwand 14 um die horizontale Taschen-Schwenkachse 26 geschwenkt. Durch die Verstellbewegung der Ladeplattform 32 in vertikaler Richtung kann die Hängetasche 12.1 auch entriegelt werden.

Da, wie aus dem Figuren 2 und 3 hervorgeht, die zweite Taschenseitenwand 16 an einem Ende 16e fest mit dem Anhängmittel 22 verbunden ist, werden gleichzeitig die erste Taschenseitenwand 14 und die zweite Taschenseitenwand 16 auseinander geklappt, so dass sich der Fördergutaufnahmebereich 20 öffnet.

Für Hängetaschen 12 verschiedener Größe, bei denen sich die Taschen-Schwenkachsen 26 auf unterschiedlicher Höhe über dem Boden befinden, kann die Ladeplattform 32 jeweils auf die geeignete Höhe zum automatischen Aufklappen und ggf. Entriegeln der jeweiligen Hängetasche gefahren werden.

Die hierzu notwendigen Informationen über die jeweilige Hängetasche können einer an dieser vorgesehenen Kennung 17 (vgl. Fig. 10a), etwa einem RFID-Transponder oder Barcode, entnommen werden, vorzugsweise automatisch über eine entsprechende Ausleseeinrichtung 19 (vgl. Fig. 10a), die in Kommunikationsverbindung mit der Steuereinrichtung 36 steht.

Ausgehend von der in Figur 2 gezeigten Stellung wird die Ladeplattform 32 und mit dieser die erste Hängetasche 12.1 um 90° um eine vertikale Plattform-Schwenkachse 50 verschwenkt, wie durch den gestrichelten Pfeil R1 in Figur 2 angedeutet ist.

Wie in Figur 3 gezeigt, weist der Fördergutaufnahmebereich 20 dann zum Betrachter hin, und die erste Hängetasche 12.1 kann auf einfache Weise mit einem hier nur schematisch dargestellten Artikel als Fördergut 25 beladen werden.

Sowohl die Stellung der Ladeplattform in Figur 3 wie auch in Figur 2 kann als Ladestellung interpretiert werden, insbesondere diejenige in Figur 3. In beiden Figuren 2 und 3 befindet die Hängetasche sich in einer Öffnungsstellung.

Ausgehend von der in Figur 3 gezeigten Stellung kann nun die Ladeplattform 32 und mit dieser die erste Hängetasche 12.1, wie durch die gestrichelten Pfeile V2 und R2 angedeutet, wieder um 90° zurück gedreht und nach unten verfahren werden, wodurch die Ladeplattform 32 zurück in die Ruhestellung verbracht wird.

Aufgrund der Schwerkraft klappen die erste und die zweite Taschenseitenwand 14, 16 dabei automatisch wieder zusammen, jedenfalls soweit dies mit der aktuellen Beladung möglich ist.

Im vorliegenden Ausführungsbeispiel ist die erste Taschenseitenwand 14 als formstabiles Tablett ausgebildet, die zweite Taschenseitenwand 16 als elastische Folien- oder Textilbahn, die das in der Hängetasche 12 aufgenommene Fördergut 25 gegen die erste Taschenseitenwand 14 drückt und damit weitgehend fixiert.

Obwohl in den vorstehend beschriebenen Figuren ein Belade-Verfahren dargestellt ist, kann die dargestellte Ladeplattform in entsprechender Weise auch zum Entladen von zuvor beladenen Hängetaschen eingesetzt werden. Hierzu kann insbesondere vorgesehen sein, dass die Ladeplattform zusätzlich um eine (in den Figuren nicht dargestellte) horizontale Plattform-Kippachse verkippbar ist (die parallel zur Taschen-Schwenkachse 26 verlaufen könnte), was das Entladen durch Schwerkraft erleichtern kann.

Die Verstellung der Ladeplattform 32 kann beispielsweise pneumatisch, aber auch hydraulisch oder elektrisch oder in einer beliebigen Kombination davon erfolgen, wobei die Ladeplattform 32 durch ihre tragende Kolbenstange 38 verstellbar und vorzugsweise um diese drehbar ist, so dass die Hängetasche 12 in ihrer geöffneten Stellung einem seitlich zu der Hängefördereinrichtung 10 angeordneten Arbeitsplatz zugewandt werden kann, wie in Figur 3 dargestellt.

Damit die Hängetasche 12 auch in ihrem an der Führungsschienenanordnung 24 angehängten Zustand dazu in der Lage ist, eine entsprechende Schwenkbewegung um eine vertikale Schwenkachse zu vollführen, kann das Anhängmittel 22 ein geeignetes Schwenk-Lager 23 umfassen, wie in den Figuren angedeutet, die Aufhängung kann jedoch auch einfach soweit auf Torsion belastbar sein, dass sie die Schwenkbewegung (von Figur 2 zu Figur 3 und umgekehrt) mit vollzieht.

Die einzelnen Hängetaschen 12 können durch vorzugsweise automatisch auslesbare Kennungen individualisiert sein, etwa Barcodes oder RFID-Tags, und die Hängefördereinrichtung kann hierzu geeignete Leseeinrichtungen umfassen, insbesondere an der Ladestation.

Dies kann dazu beitragen, dass an einer vorbestimmten Abwurf-Station verschiedenartige Artikel, die etwa Bestellung zugeordnet sind, entladen und einem Arbeitsplatz zugeführt werden können, an welchem sie zusammengestellt und verpackt werden. Somit findet eine automatisierte Kommissionierung statt. Eine später ankommende Hängetasche bringt gegebenenfalls ein weiteres der Bestellung zuzuordnendes Produkt.

Figur 10 illustriert eine leicht modifizierte Ladestation 30', die anstelle der Ladestation 30 in der Hängefördereinrichtung 10 der Figuren 1 bis 4 verwendet werden kann und zeigt in den Teilabbildungen a) und b) die Ladestation 30' jeweils in Richtung der Führungsschienenanordnung 24 betrachtet beim Entladen (a) bzw. Beladen (b).

So kann vorgesehen sein, dass die Ladeplattform 32' der Ladestation 30' kleiner ausgebildet ist, als in den Figuren 1 bis 4, so dass insbesondere eine Ladekante 14k der in der geöffneten Stellung auf der Ladeplattform 32 aufliegenden ersten Taschenseitenwand 14 der Hängetasche 12 bündig mit der Ladeplattform abschließt oder sogar über die Ladeplattform vorsteht, um die Ladevorgänge zu vereinfachen.

Außerdem ist bei der Ladestation 30' die Einweiseinrichtung 40' in die Ladplattform 32 integriert und beispielsweise als Stufe am in Transportrichtung vorderen Ende der Ladeplattform 32 in der Ruhestellung ausgebildet. An der Einweiseinrichtung 40' kann auch in diesem Fall ein Berührungs- oder Annäherungssensor 42 vorgesehen sein.

Die Teilabbildungen 10a) und 10b) illustrieren, dass die Ladeplattform 32' nicht nur vertikal verfahrbar und um eine vertikale Achse 50 schwenkbar, sondern auch um eine horizontale Plattform-Kippachse 33 verkippbar ist, die im vorliegenden Fall mit der Taschen-Schwenkachse 26 der auf der Ladeplattform 32' aufliegenden Hängetasche 12 zusammenfällt, um eine Entladestellung (a) bzw. Beladestellung (b) der Ladeplattform 32' einstellen zu können, bei der die Ent- bzw. Beladung durch die Schwerkraft unterstützt wird. Sämtliche Verfahr-, Schwenk- und Kippbewegungen der Ladeplattform 32' können dabei durch die Antriebseinrichtung 34 angetrieben und durch die Steuereinrichtung 36 angesteuert werden.

Eine als Strichfigur angedeutete Bedienperson 23, die sich seitlich von der Führungsschienenanordnung 24 befindet, kann aufgrund der Verschwenkung der Hängetasche 12 um die vertikale Achse 40 leicht auf die geöffnete Hängetasche 12 zugreifen. Anstelle der Bedienperson 23 könnte auch eine automatische Fördereinrichtung zum Ent- und Beladen der Hängetaschen 12 vorgesehen sein.

Die zum Verkippen verwendete Mechanik ist in den Figuren nicht dargestellt. Beispielsweise könnte auch hierfür eine geeignete Kolben-ZylinderAnordnung verwendet werden.

Ein in Figur 10b) mit gestrichelten Linien umrandeter Bereich 29 kann durch eine hier nur schematisch angedeutetete Lichtgitter-Anordnung 27 überwacht werden, um zum Beispiel zu verhindern, dass die Hängetasche 12 automatisch geschlossen wird, solange die Bedienperson 23 in den Bereich 29 eingreift.

Am Beispiel der Teilabbildung 10a) ist weiter illustriert, dass die Hängetasche 12 mit einer automatisch durch eine geeignete Leseeinrichtung 19 auslesbaren Kennung 17 wie einem Barcode oder RFID-Transponder versehen sein kann.

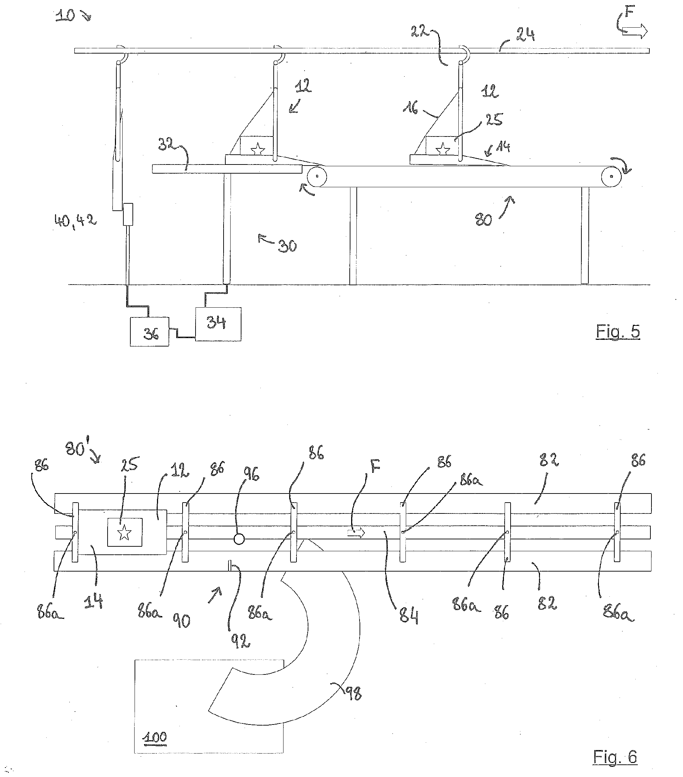

Figur 5 zeigt eine Abwandlung des in den Figuren 1 bis 4 dargestellten Ausführungsbeispiels, bei dem in Transportrichtung F hinter der Ladestation 30 ein (schematisch und stark verkürzt dargestelltes) Förderband 80 vorgesehen ist, auf welchem die Hängetaschen 12 in ihrer Ladestellung weiter transportiert werden. Hierbei ist sowohl möglich, dass die Hängetaschen weiter an der Führungsschienenanordnung 24 angehängt bleiben, als auch, dass sie von dieser zum Transport auf dem Förderband 80 getrennt werden. Der Einsatz eines solchen Förderbandes 80 ist besonders dann sinnvoll, wenn die Hängetaschen an der Ladestation beladen bzw. zum Beladen geöffnet werden und dann auf ihrem weiteren Transportweg entlang dem Förderband 80 mit zusätzlichen Artikeln beladen werden sollen.

Figur 11 zeigt eine stark schematisierte Darstellung eines solchen Förderbandes 80 in einer vereinfachten Aufsicht. Geschwungene Doppel-Linien deuten an, dass das Förderband viel länger sein kann, als dargestellt.

Von dem solchen Förderband 80 können die Hängetaschen 12 (wie später anhand der Figuren 6 bis 9 noch genauer erläutert, bevorzugt durch Schwenken und ggf. Kippen) an einer oder mehreren Entladestationen 101 entleert werden und dann, immer noch im geöffneten Zustand, auf dem Förderband 80 an verschiedenen Beladestationen 102a, 102b, 102c für Einzelartikel vorbei transportiert werden, wo sie, automatisiert oder manuell, mit unterschiedlichen Artikeln 15a, 15b, 15c, jeweils zum Beispiel aus einem Karton oder weiteren Förderband beladen werden können. Hierzu können die Hängetaschen 12 auch im um 90° um eine vertikale Achse verschwenkten Zustand transportiert werden, wie Figur 11 angedeutet, damit der Fördergutaufnahmebereich leichter von den Beladestationen 102a, 102b, 102c aus zugänglich ist. Die Entladestationen 101 können auf bekannte Weise etwa mit den Beladestationen 102a, 102b, 102c über weitere Fördereinrichtungen verbunden sein. Auf diese Weise kann die erfindungsgemäße Hängefördereinrichtung in vorteilhafter Weise mit bekannter Kartonfördertechnik kombiniert werden.

Verlässt eine an der Führungsschienenanordnung angehängte Hängetasche 12 zum Beispiel nach endgültiger Be- oder Entladung solch ein Förderband 80, wird sie durch die Schwerkraft automatisch geschlossen und kann, nun wieder im Wesentlichen vertikal herabhängend zu einer Lager- oder Sortierzone gefördert werden. Eine solche vertikal herabhängende, befüllte Hängetasche ist in Figur 11 mit 12v gekennzeichnet.

Figur 11 illustriert einen Sortiervorgang, bei dem die Hängetaschen 12 zunächst Artikel 15a, 15c der gleichen Art transportieren und dann an den Entladestationen 101 entleert werden, von wo aus die Artikel in KartonFördertechnik sortenrein den Beladestationen 102a, 102c zugeführt werden, von denen aus die nun leeren Hängetaschen mit einer jeweils gewünschten Artikelkombination, auch in Kombination mit weiteren Artikeln 15b befüllt werden können. Die einzelnen Hängetaschen 12 können dabei anhand von an diesen angebrachten, automatisch auslesbaren Kennungen eindeutig identifiziert werden.

Die Figuren 6 bis 9 zeigen jeweils in einer Draufsicht Ausschnitte eines weiteren Ausführungsbeispiels einer erfindungsgemäßen Hängefördereinrichtung 10, genauer ein abgewandeltes Förderband 80' mit Entlade-Einrichtung 90 zu verschiedenen Zeitpunkten, um den Transport und das Entladen der Hängetaschen 12 vermittels des Förderbands 80' zu illustrieren.

Um wesentliche Einzelheiten besser erkennen zu können, wurde in den Draufsichten der Figuren 6 bis 9 auf eine Darstellung der zweiten Taschenseitenwände, der Anhängmittel und der Führungsschienenanordnung verzichtet.

Das Förderband 80' umfasst zwei stationäre Schienenelemente 82, auf denen die Hängetaschen 12 aufliegen und verschoben werden, und ein in Transportrichtung F relativ zu den Schienenelementen 82 bewegliches, unterhalb der Schienenelemente 82 angeordnetes Transportelement 84 (etwa in Form eines geschlossenen, umlaufenden Transportbandes), an dem in regelmäßigen Abständen in Transportrichtung F Transportbalken 86 vorgesehen sind, die oberhalb der Schienenelemente 82 angeordnet und um eine vertikale Mittelachse 86a schwenkbar an dem Transportelement 84 vorgesehen sind.

Die Transportbalken 86 dienen dazu, die Hängetaschen 12 in Transportrichtung F auf dem Schienenelement 82 voran zu schieben, wie aus einem Vergleich der Figuren 6 bis 9 hervorgeht.

Das Förderband 80' umfasst eine Entlade-Einrichtung 90, um einen auf der ersten Taschenseitenwand 14 liegenden Artikel als Fördergut 25 automatisch aus der Hängetasche 12 zu entladen.

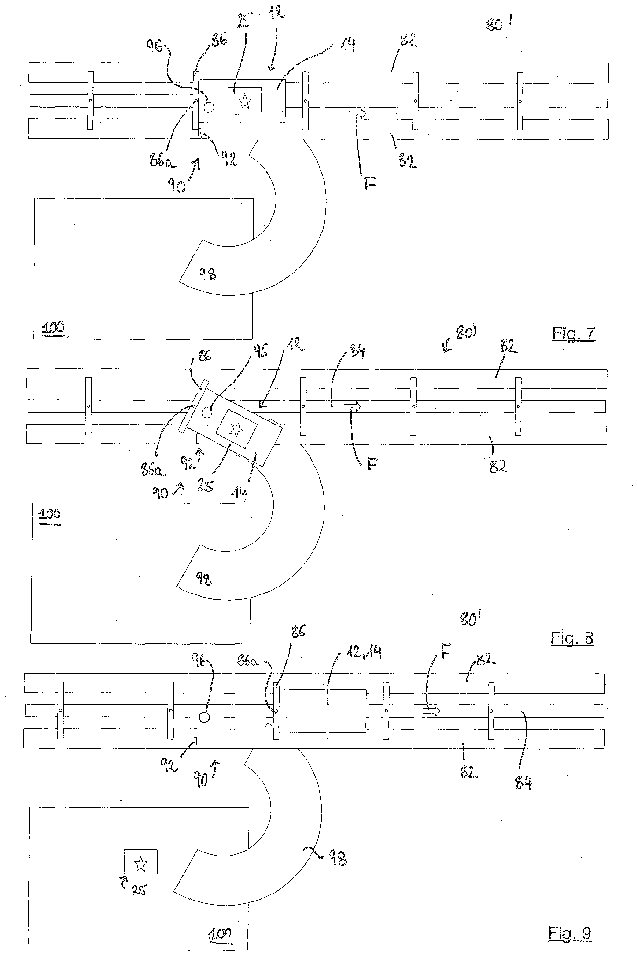

Diese Entlade-Einrichtung 90 umfasst im dargestellten Beispiel eine Störkontur 92, die in den Transportweg der Transportbalken 86 hinein ragt. Durch Wechselwirkung zwischen der Störkontur 92 und dem in Richtung F vermittels des Transportelements 84 bewegten Transportbalken 86 wird letzerer zeitweise um die Mittelachse 86a geschwenkt, bis der Transportbalken 86 die Störkontur 92 passieren kann (vgl. Figuren 7-8)

Durch den Transportbalken 86 wird auch die von diesem transportierte Hängetasche 12 um eine vertikale Achse verschwenkt, so dass der Fördergutaufnahmebereich 20 seitlich von dem Förderband 80' weg weist, wie in Figur 8 illustriert. In dieser Stellung kann die Hängetasche 12 einfach manuell entladen werden.

Das Förderband kann auch so ausgebildet sein, dass eine Verschwenkung der geöffneten Hängetaschen auf dem Förderband um eine vertikale Achse mit einem Schwenkwinkel von bis zu 90° erfolgt, so dass der Fördergutaufnahmebereich senkrecht von dem Förderband weg weist.

Besonders bevorzugt umfasst die Entlade-Einrichtung 90 jedoch zusätzlich noch einen unterhalb von der Transportebene bzw. der Ebene der Schienenelemente 82 an einer geeigneten Stelle vorgesehenen Hebestößel 96, der in vertikaler Richtung verstellbar ist und dann, wenn die Hängetasche 12, wie in Figur 7 dargestellt, durch den Transportbalken 86 verschwenkt wird bzw. wurde, vertikal nach oben verfahren wird, um einen in Transportrichtung F hinteren Bereich der ersten Taschenseitenwand 14 zeitweise anzuheben, um die erste Taschenseitenwand 14 so um eine horizontale Kippachse zu verkippen, dass ein auf der ersten Taschenseitenwand 14 aufliegender Artikel als Fördergut 25 von der ersten Taschenseitenwand 14 herunter rutscht. Der Hebestößel 96 ist in den Figuren, in denen er von der Hängetasche 12 verdeckt wird, durch gestrichelte Linien angedeutet. Er kann zum Beispiel als eine Kolben-Zylinder-Anordnung mit vertikal verfahrbarem Kolben und an den Schienenelementen 82 fixiertem Zylinder ausgebildet sein. Details der Montage von dem Hebestößel 96 sind in den Schemazeichnungen nicht dargestellt.

Gemäß einer bevorzugten Weiterbildung kann vorgesehen sein, dass eine weitere Fördereinrichtung, etwa eine Rutsche 98 vorgesehen ist, um das an der Entlade-Einrichtung 90 entladene Fördergut 25 weiter zu befördern, etwa zu einem Arbeitsplatz 100 wie einem Packtisch.

Nach dem Passieren der Störkontur 92 kann der jeweilige Transportbalken 86 wieder in seine Ausgangsstellung, vorzugsweise senkrecht zur Transportrichtung F, zurückgestellt werden, beispielsweise durch eine (nicht dargestellte) Rückstellfeder oder eine andere mechanische Einrichtung.

Es ist aber auch möglich, das Förderband so auszugestalten, dass die Hängetaschen über längere Zeit oder dauerhaft in ihrem verschwenkten Zustand transportiert werden (wie auf dem Förderband in Figur 11 in der Nähe der Beladestationen 102a bis 102c). Dies ist insbesondere dann sinnvoll, wenn die Hängetaschen an verschiedenen, hintereinander entlang des Förderbands angeordneten Stationen jeweils mit unterschiedlichen weiteren Artikeln beladen werden sollen, etwa um einen bestimmten Auftrag zusammenzustellen.

Die Förderband 80' kann anstelle des in Figur 5 illustrierten Förderbands 80 eingesetzt werden.

Die Anmelderin behält sich jedoch vor, Schutz für ein Förderband zum Transport von Klapptaschen, insbesondere Hängetaschen, in ihrer Öffnungsstellung, mit einer Entlade-Einrichtung auch unabhängig von der zuvor beschriebenen Ladestation zu beanspruchen, genauer für ein:
Förderband zum Transport von Klapptaschen mit einer ersten und einer zweiten Taschenseitenwand, die zum Öffnen- und Schließen eines Fördergutaufnahmebereiches auseinander- und zusammenklappbar sind, wobei das Förderband dazu ausgebildet ist, die Klapptaschen in einer auseinandergeklappten Öffnungsstellung mit auf dem Förderband im Wesentlichen horizontal aufliegender erster Taschenseitenwand zu transportieren, und wobei das Förderband eine Entlade-Einrichtung umfasst, die dazu ausgebildet ist, die Klapptasche während ihres Transports in Transportrichtung zeitweise um eine vertikale Schwenkachse zu verschwenken und bevorzugt zeitweise um eine horizontale Kippachse zu verkippen.

Zum zeitweisen Verschwenken der Klapptasche um die vertikale Schwenkachse kann ein Transportbalken verwendet werden, der um eine vertikale Achse schwenkbar an einem in Transportrichtung bewegbaren Transportelement fixiert ist und während des Transports aufgrund einer Wechselwirkung mit einer ortsfest vorgesehenen Störkontur zeitweise um die vertikale Achse geschwenkt wird.

Zum zeitweisen Verkippen der Klapptasche um eine horizontale Achse kann ein vertikal verfahrbarer Hebestößel eingesetzt werden.

Vorzugsweise wird ein solches Förderband mit einer erfindungsgemäßen Hängefördereinrichtung kombiniert, wie sie in den Ansprüchen beschrieben ist.

## Patentansprüche

1. Hängefördereinrichtung (10) zum Transport von Fördergut (25) in Hängetaschen (12), umfassend, eine Mehrzahl von Hängetaschen (12), jeweils mit einer ersten Taschenseitenwand (14) und einer zweiten Taschenseitenwand (16), die in einem Klappverbindungsbereich (18) so miteinander verbunden sind, dass sie zum Öffnen und Schließen eines Fördergutaufnahmebereiches (20) auseinanderklappbar und zusammenklappbar sind, und mit einem Anhängmittel (22) zum Anhängen der Hängetasche (12) an der Hängefördereinrichtung, wobei die erste Taschenseitenwand (14) schwenkbeweglich um eine in einer Transportstellung der Hängetasche (12) zumindest annähernd horizontal verlaufende Taschen-Schwenkachse (26) mit dem Anhängmittel (22) verbunden ist, und die zweite Taschenseitenwand (16) derart mit dem Anhängmittel (22) verbunden oder davon beaufschlagbar ist, dass durch Schwenken der ersten Taschenseitenwand (14) um die Taschen-Schwenkachse (26) die Taschenseitenwände (14, 16) auseinanderklappbar und zusammenklappbar sind,
wobei die Hängefördereinrichtung (10) weiter umfasst:
eine Führungsschienenanordnung (24) zum geführten Bewegen der Hängetaschen (12) in ihrer Transportstellung, und
eine Ladestation (30) zum Beladen oder/und Entladen der Hängetaschen (12), mit einer Ladeplattform (32), die unterhalb der Führungsschienenanordnung (24) positioniert ist
**dadurch gekennzeichnet, dass** die Ladeplattform (32) relativ zu der Führungsschienenanordnung (24) in vertikaler Richtung verstellbar, vorzugsweise automatisch verfahrbar ist, und dass
die Ladeplattform (32) weiter um eine im Wesentlichen vertikale Plattform-Schwenkachse (50) drehbar ist.

2. Hängefördereinrichtung (10) nach Anspruch 1,
**dadurch gekennzeichnet, dass** die Ladeplattform (32) weiter um eine im Wesentlichen horizontale Plattform-Kippachse verkippbar ist.

3. Hängefördereinrichtung (10) nach einem der vorhergehenden Ansprüche,
**dadurch gekennzeichnet, dass** die Ladeplattform (32) durch eine Verstellbewegung zwischen einer Ruhestellung (Fig. 1, 4) und einer Ladestellung (Fig. 3) derart verstellbar ist, dass die Verstellbewegung eine Translation in vertikaler Richtung und vorzugsweise zusätzlich eine Rotation um die Plattform-Schwenkachse (50) umfasst.

4. Hängefördereinrichtung (10) nach Anspruch 2 und 3,
**dadurch gekennzeichnet, dass** die Ladeplattform (32) durch die Verstellbewegung zwischen der Ruhestellung (Fig. 1, 4) und der Ladestellung (Fig. 3) weiter derart verstellbar ist, dass die Verstellbewegung auch ein Verkippen der Ladeplattform (32) um die Plattform-Kippachse umfasst.

5. Hängefördereinrichtung (10) nach Anspruch 3 oder4
**dadurch gekennzeichnet, dass** sie weiter eine manuell oder automatisch betätigbare Auslöseeinrichtung (42, 36) umfasst, um ein Verfahren der Ladeplattform (32) von der Ruhestellung in die Ladestellung oder umgekehrt auszulösen.

6. Hängefördereinrichtung (10) nach einem der vorhergehenden Ansprüche,
**dadurch gekennzeichnet, dass** die Ladestation (30) weiter eine in Transportrichtung (F) der Hängetaschen (12) vorder Ladeplattform (32) angeordnete oder an der Ladeplattform (32) vorgesehene, vorzugsweise in diese integrierte Einweiseinrichtung (40) umfasst, um die Hängetaschen (10) in ihrer Transportstellung auszurichten.

7. Hängefördereinrichtung (10) nach Anspruch 6,
**dadurch gekennzeichnet, dass** die Einweiseinrichtung (40) zwei Anschlagelemente umfasst, die senkrecht zu der Transportrichtung (F) voneinander beabstandet sind.

8. Hängefördereinrichtung (10) nach Anspruch 6 oder 7
**dadurch gekennzeichnet, dass** die Einweiseinrichtung (40) vertikal verstellbar ist.

9. Hängefördereinrichtung (10) nach einem der Ansprüche 3 bis 4 in Kombination mit Anspruch 6,
**dadurch gekennzeichnet, dass** die Einweiseinrichtung (40) einen Sensor (42) umfasst, der bei Annäherung einer Hängetasche (12) auf einen vorgegebenen Abstand oder bei Kontakt mit einer Hängetasche (12) ein Verfahren der Ladeplattform von der Ruhestellung in die Ladestellung auslöst.

10. Hängefördereinrichtung (10) nach einem der vorhergehenden Ansprüche,
**dadurch gekennzeichnet, dass** sie in Transportrichtung (F) hinter der Ladeplattform (32) ein Förderband (80, 80') zum Transport der Hängetaschen (12) in einer Öffnungsstellung umfasst.

11. Hängefördereinrichtung (10) nach einem der vorhergehenden Ansprüche,
**dadurch gekennzeichnet, dass** sie eine weitere Fördereinrichtung umfasst, beispielsweise eine Rutsche (98), über die Fördergut (25), vorzugsweise an der Ladestation (30) aus einer Hängetasche (12) entladenes Fördergut (25), einem Arbeitsplatz (100) oder selektiv einem von mehreren Arbeitsplätzen zuführbar ist, beispielsweise um das Fördergut (25) zu verpacken oder zu kommissionieren.

12. Hängefördereinrichtung (10) nach einem der vorhergehenden Ansprüche,
**dadurch gekennzeichnet, dass** die Hängetaschen (12) jeweils mit einer vorzugsweise automatisch auslesbaren Kennung (17) versehen sind, etwa einem Barcode oder RFID-Transponder, vermittels der die jeweilige Hängetasche (12) eindeutig identifizierbar ist, und dass die Hängefördereinrichtung (10) weiter wenigstens eine Leseeinrichtung (19) zum Auslesen dieser Kennungen umfasst.

13. Hängefördereinrichtung (10) nach einem der vorhergehenden Ansprüche,
**dadurch gekennzeichnet, dass** dass die Ladestation (30) eine Lichtschranken- oder Lichtgitter-Anordnung (27) umfasst, welche insbesondere so angeordnet ist, dass sie den zum Be- oder Entladen einer Hängetasche (12) vorgesehenen Bereich (29) der Ladeplattform (32') in der Ladestellung überwacht.

## Claims

1. Hanging conveyor device (10) for transporting conveyed goods (25) in hanging bins (12), comprising a plurality of hanging bins (12), which each comprise a first bin side wall (14) and a second bin side wall (16) which are interconnected in a flap connection region (18) such that they can be opened up and closed in order to open and close a conveyed goods receiving region (20), and comprising a suspension means (22) for suspending the hanging bins (12) from the hanging conveyor device, the first bin side wall (14) being connected to the suspension means (22) so as to be pivotable about a bin pivot axis (26) extending at least approximately horizontally in a transport position of the hanging bin (12), and the second bin side wall (16) being connected to the suspension means (22) or acted upon thereby such that the bin side walls (14, 16) can be opened up and closed by pivoting the first bin side wall (14) about the bin pivot axis (26),
the hanging conveyor device (10) further comprising:
a guide rail assembly (24) for moving the hanging bins (12) in a guided manner in the transport position thereof, and
a loading station (30) for loading and/or unloading the hanging bins (12), comprising a loading platform (32) positioned below the guide rail assembly (24),
**characterised in that** the loading platform (32) can be adjusted, preferably automatically moved, in the vertical direction relative to the guide rail assembly (24), and **in that** the loading platform (32) can also be rotated about a substantially vertical platform pivot axis (50).

2. Hanging conveyor device (10) according to claim 1, **characterised in that** the loading platform (32) can also be tilted about a substantially horizontal platform tilt axis.

3. Hanging conveyor device (10) according to either of the preceding claims, **characterised in that** the loading platform (32) can be adjusted by means of an adjustment movement between an idle position (Fig. 1 and 4) and a loading position (Fig. 3) such that the adjustment movement includes a translational movement in the vertical direction and preferably also a rotational movement about the platform pivot axis (50).

4. Hanging conveyor device (10) according to claims 2 and 3, **characterised in that** the loading platform (32) can also be adjusted by means of the adjustment movement between the idle position (Fig. 1 and 4) and the loading position (Fig. 3) such that the adjustment movement also includes a tilting movement of the loading platform (32) about the platform tilt axis.

5. Hanging conveyor device (10) according to either claim 3 or claim 4, **characterised in that** it also comprises a manually or automatically actuated trigger device (42, 36) in order to trigger movement of the loading platform (32) from the idle position into the loading position, or vice versa.

6. Hanging conveyor device (10) according to any of the preceding claims, **characterised in that** the loading station (30) also comprises an instruction device (40), which is arranged in front of the loading platform (32) in the transport direction (F) of the hanging bins (12) or is provided on, preferably integrated in, the loading platform (32), in order to orient the hanging bins (10) in the transport position thereof.

7. Hanging conveyor device (10) according to claim 6, **characterised in that** the instruction device (40) comprises two stop elements that are mutually spaced perpendicularly to the transport direction (F).

8. Hanging conveyor device (10) according to either claim 6 or claim 7, **characterised in that** the instruction device (40) is vertically adjustable.

9. Hanging conveyor device (10) according to any of claims 3 to 4 in combination with claim 6, **characterised in that** the instruction device (40) comprises a sensor (42) that triggers the loading platform to move from the idle position into the loading position when a hanging bin (12) comes to be a predetermined distance away from said sensor or when said sensor comes into contact with a hanging bin (12).

10. Hanging conveyor device (10) according to any of the preceding claims, **characterised in that** it comprises a conveyor belt (80, 80') for transporting the hanging bins (12) in an open position behind the loading platform (32) in the transport direction (F).

11. Hanging conveyor device (10) according to any of the preceding claims, **characterised in that** it comprises an additional conveyor device, for example a chute (98), using which conveyed goods (25), preferably conveyed goods (25) which are unloaded from a hanging bin (12) at the loading station (30), can be transported to a workstation (100) or selectively to one of a plurality of workstations, for example in order to pack or pick the conveyed goods (25).

12. Hanging conveyor device (10) according to any of the preceding claims, **characterised in that** the hanging bins (12) are each provided with a preferably automatically readable identifier (17), for example a bar code or an RFID transponder, by means of which the relevant hanging bin (12) can be clearly identified, and **in that** the hanging conveyor device (10) also comprises at least one read device (19) for reading out these identifiers.

13. Hanging conveyor device (10) according to any of the preceding claims, **characterised in that** the loading station (30) comprises a light barrier assembly or light curtain assembly (27), which is in particular arranged such that it monitors the region (29) of the loading platform (32') provided for loading or unloading a hanging bin (12) in the loading position.

## Revendications

1. Convoyeur aérien (10) pour le transport d'un produit à transporter (25) dans des sacs suspendus (12), comportant une pluralité de sacs suspendus (12), pourvus chacun d'une première paroi latérale de sac (14) et d'une deuxième paroi latérale de sac (16), qui sont reliées l'une à l'autre dans une zone de liaison pliable (18) de manière à pouvoir être dépliées et repliées pour l'ouverture et la fermeture d'une zone de réception de produit à transporter (20), et comprenant un moyen de suspension (22) pour la suspension du sac suspendu (12) au convoyeur aérien, dans lequel la première paroi latérale de sac (14) est reliée au moyen de suspension (22) de manière à pouvoir pivoter autour d'un axe de pivotement de sac (26) s'étendant au moins approximativement horizontalement dans une position de transport du sac suspendu (12), et la deuxième paroi latérale de sac (16) est reliée au moyen de suspension (22) ou peut être sollicitée par celui-ci, de telle manière qu'un pivotement de la première paroi latérale de sac (14) autour de l'axe de pivotement de sac (26) permet aux parois latérales de sac (14, 16) de se déplier et de se replier,
dans lequel le convoyeur aérien (10) comporte en outre :
un ensemble de rails de guidage (24) pour le déplacement guidé des sacs suspendus (12) dans leur position de transport, et
une station de chargement (30) pour le chargement et/ou le déchargement des sacs suspendus (12), comprenant une plateforme de chargement (32), qui est positionnée au-dessous de l'ensemble de rails de guidage (24),
**caractérisé en ce que** la plateforme de chargement (32) peut être déplacée dans la direction verticale par rapport à l'ensemble de rails de guidage (24), peut de préférence être déplacée de manière automatique, et **en ce que**
la plateforme de chargement (32) peut en outre être amenée en rotation autour d'un axe de pivotement de plateforme (50) sensiblement vertical.

2. Convoyeur aérien (10) selon la revendication 1,
**caractérisé en ce que** la plateforme de chargement (32) peut en outre continuer de basculer autour d'un axe de basculement de plateforme sensiblement horizontal.

3. Convoyeur aérien (10) selon l'une quelconque des revendications précédentes,
**caractérisé en ce que** la plateforme de chargement (32) peut être déplacée entre une position de repos (figures 1, 4) et une position de chargement (figure 3) à la suite d'un mouvement de déplacement, de telle manière que le mouvement de déplacement comporte une translation dans la direction verticale et de préférence en plus une rotation autour de l'axe de pivotement de plateforme (50).

4. Convoyeur aérien (10) selon les revendications 2 et 3,
**caractérisé en ce que** la plateforme de chargement (32) peut en outre être déplacée entre la position de repos (figures 1, 4) et la position de chargement (figure 3) à la suite du mouvement de déplacement de telle sorte que le mouvement de déplacement comporte également un basculement de la plateforme de chargement (32) autour de l'axe de basculement de plateforme.

5. Convoyeur aérien (10) selon la revendication 3 ou 4,
**caractérisé en ce qu'**il comporte en outre un système de déclenchement (42, 36) à actionnement manuel ou automatique, afin de déclencher un déplacement de la plateforme de chargement (32) de la position de repos dans la position de chargement ou inversement.

6. Convoyeur aérien (10) selon l'une quelconque des revendications précédentes,
**caractérisé en ce que** la station de chargement (30) comporte en outre un système de direction (40) agencé dans la direction de transport (F) des sacs suspendus (12) devant la plateforme de chargement (32) ou prévu sur la plateforme de chargement (32), de préférence intégré dans celle-ci, afin d'orienter les sacs suspendus (10) dans leur position de transport.

7. Convoyeur aérien (10) selon la revendication 6,
**caractérisé en ce que** le système de direction (40) comporte deux éléments de butée, qui sont espacés l'un de l'autre perpendiculairement à la direction de transport (F).

8. Convoyeur aérien (10) selon la revendication 6 ou 7,
**caractérisé en ce que** le système de direction (40) peut être déplacé verticalement.

9. Convoyeur aérien (10) selon l'une quelconque des revendications 3 à 4 en combinaison avec la revendication 6,
**caractérisé en ce que** le système de direction (40) comporte un capteur (42), qui, lorsqu'il se rapproche d'un sac suspendu (12) sur une distance prédéfinie ou lorsqu'il entre en contact avec un sac suspendu (12), déclenche un déplacement de la plateforme de chargement de la position de repos dans la position de chargement.

10. Convoyeur aérien (10) selon l'une quelconque des revendications précédentes,
**caractérisé en ce qu'**il comporte dans la direction de transport (F) derrière la plateforme de chargement (32) une bande de transport (80, 80') pour le transport des sacs suspendus (12) dans une position d'ouverture.

11. Convoyeur aérien (10) selon l'une quelconque des revendications précédentes,
**caractérisé en ce qu'**il comporte un autre convoyeur, par exemple une glissière (98), par l'intermédiaire de laquelle le produit à transporter (25), de préférence le produit à transporter (25) déchargé d'un sac suspendu (12) à la station de chargement (30), peut être amené à un poste de travail (100) ou sélectivement à un ou plusieurs postes de travail, par exemple afin d'emballer ou de préparer le produit à transporter (25) pour une commande.

12. Convoyeur aérien (10) selon l'une quelconque des revendications précédentes,
**caractérisé en ce que** les sacs suspendus (12) sont pourvus chacun d'une identification (17) de préférence lisible automatiquement, par exemple un code à barres ou un transpondeur RFID, au moyen de laquelle le sac suspendu (12) respectif est clairement identifiable, et **en ce que** le convoyeur aérien (10) comporte en outre au moins un dispositif de lecture (19) pour la lecture de ces identifications.

13. Convoyeur aérien (10) selon l'une quelconque des revendications précédentes,
**caractérisé en ce que** la station de chargement (30) comporte un ensemble de barrières lumineuses ou de grilles lumineuses (27), lequel est agencé en particulier de manière à surveiller la zone (29) de la plateforme de chargement (32') dans la position de chargement, laquelle zone sert au chargement ou au déchargement d'un sac suspendu (12).
